# EUROPÄISCHE PATENTSCHRIFT

(11) **EP 0 400 410 B1**
(45) Veröffentlichungstag und Bekanntmachung des Hinweises auf die Patenterteilung: **05.04.1995**
(21) Anmeldenummer: 90109397.1
(22) Anmeldetag: 18.05.1990
(51) Int. Cl.: C08F 2/26, D21H 17/34

(54) **Verfahren zum Leimen von Papier**
Process for sizing paper
Procédé pour l'encollage du papier

(30) Priorität: 31.05.1989 DE 3917647
(43) Veröffentlichungstag der Anmeldung: 05.12.1990
(73) Patentinhaber: BAYER AG, 51368 Leverkusen (DE)
(72) Erfinder: Sackmann, Günther, Dr., D-5090 Leverkusen 3 (DE); Probst, Joachim, Dr., D-5090 Leverkusen (DE); Pedain, Josef, Dr., D-5000 Koeln 80 (DE); König, Joachim, Dr., D-5068 Odenthal (DE); Bäumgen, Heinz, D-5090 Leverkusen (DE)

(56) Entgegenhaltungen:
- EP-A- 0 334 032
- EP-A- 0 351 663
- DE-A- 1 953 348
- DE-A- 1 953 349

## Beschreibung

Gegenstand der vorliegenden Erfindung ist ein Verfahren zum Leimen von Papier und papierähnlichen Materialien, das dadurch gekennzeichnet ist, daß als Leimungsmittel Emulsionspolymerisate, vorzugsweise in Form wäßriger Lösungen oder Dispersionen, eingesetzt werden, die erhältlich sind durch radikalische Polymerisation von Vinylmonomeren bestehend aus einem Gemisch aus
A) 5 - 95 Gew.-% mindestens eines Monomeren aus der Reihe Acrylnitril, Methacrylnitril, Carbonsäurevinylester und
B) 5 - 95 Gew.-% Acryl- und/oder Methacrylsäureester,
wobei die Summe der Komponenten A) + B) 100 Gew.-% beträgt,
in wäßrigem Medium in Gegenwart sulfonsäuregruppenhaltiger Oligourethane, die im statistischen Durchschnitt pro Molekül mindestens 0,2 Verzweigungsstellen aufweisen, frei sind von Acrylharnstoffen der Formel 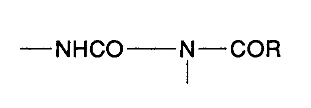
worin
- R: für einen organischen Rest steht,
ein mittleres Molekulargewicht unter 30 000 besitzen und durchschnittlich mindestens 2,2 endständige Sulfonatgruppen pro Molekül aufweisen.

DE-A 19 53 349 beschreibt wäßrige Dispersionen von Polymerisaten olefinisch ungesättigter Monomere, die durch radikalische Polymerisation in Gegenwart von Urethangruppen enthaltenden Emulgatoren hergestellt werden. Die Produkte sind u. a. zur Beschichtung und zum Imprägnieren verschiedenster Substrate u. a. auch Papier geeignet. Im Gegensatz zu den erfindungsgemäß einzusetzenden Oligourethanen von verzweiter Molekülstruktur handelt es sich bei den in den Beispielen aus DE-A 19 53 349 eingesetzten Oligourethanen um linare Produkte, zu deren Herstellung ausschließlich Diisocyanate und difunktionelle Hydroxylverbindungen verwendet werden. Außerdem werden gemäß Beispielen aus DE-A 19 53 349 überwiegend die reinen Monomeren polymerisiert. Lediglich in den Beispielen 5, 17 und 34 werden Monomermischungen eingesetzt, wobei es sich bei der einen Monomerkomponente immer um Styrol handelt.

Die Oligourethane weisen ein aus der Stöchiometrie der Ausgangsmaterialien berechenbares mittleres Molekulargewicht von unter 30.000, vorzugsweise von 1.500 bis 20.000 auf. Die Oligourethane weisen eine verzweigte Molekülstruktur auf. Dies bedeutet, daß bei ihrer Herstellung Aufbaukomponenten mitverwendet werden, die im Sinne der Isocyanat-Additionsreaktion höher als difunktionell sind. Außerdem weisen die Oligourethane endständig eingebaute Sulfonatgruppen auf, wobei im statistischen Mittel pro Molekül mindestens 2,2 derartige endständige Sulfonatgruppen vorliegen.

Vorzugsweise weisen die Oligourethane einen Gehalt an endständig eingebauten ionischen Gruppen von 7,3 bis 400, insbesondere von 11 bis 300 Milliäquivalent pro 100 g auf.

Die Herstellung der Oligourethane erfolgt nach den bekannten Methoden der Polyurethanchemie. Ausgangsmaterialien hierfür sind
a) organische Polyisocyanate, vorzugsweise des Molekulargewichtsbereichs 168 bis 1.000,
b) organische Verbindungen mit gegenüber Isocyanatgruppen reaktionsfähigen Gruppen des Molekulargewichtsbereiches 60 bis 10.000, vorzugsweise 62 bis 3.000, und
c) Aufbaukomponenten mit Sulfonsäuregruppen bzw. deren Salze.

Geeignete Polyisocyanate a) sind beispielsweise 4,4'-Diisocyanatodiphenylmethan, 2,4- und/oder 2,6-Diisocyanatotoluol, 4,4'-Diisocyanatodicyclohexylmethan, 1-Isocyanato-3,3,5-trimethyl-5-isocyanatomethyl-cyclohexan (IPDI), 1,6-Diisocyanatohexan (HDI), Isocyanuratgruppen aufweisende Polyisocyanate, wie z.B. das im wesentlichen aus N,N',N''-Tris-(6-isocyanatohexyl)-isocyanurat und gegebenenfalls seinen höheren Homologen bestehende, durch Trimerisierung eines Teils der Isocyanatgruppen von HDI erhältliche Polyisocyanat, Urethangruppen aufweisende Polyisocyanate, wie beispielsweise das Umsetzungsprodukt von 1 Mol Trimethylolpropan mit 3 Mol IPDI oder mit 3 Mol 2,4-Diisocyanatotoluol oder auch Biuretpolyisocyanate, wie beispielsweise das im wesentlichen, aus N,N′,N˝-Tris-(6-isocyanatohexyl)-biuret und seinen höheren Homologen bestehende Biuretpolyisocyanat auf Basis von HDI. Beliebige Gemische derartiger Polyisocyanate können ebenfalls als Komponente a) bei der Herstellung der Oligourethane verwendet werden. Zu den Aufbaukomponenten a) gehören außerdem beispielsweise a₁) Acylharnstoffgruppen der allgemeinen Formel 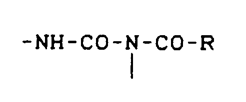
aufweisende Polyisocyanate. Die Herstellung der Aufbaukomponenten a₁) erfolgt in Analogie zur Lehre der DE-OS 24 36 741 durch partielle Carbodiimidisierung der Isocyanatgruppen von organischen Polyisocyanaten und Anlagerung von organischen Carbonsäuren R-COOH an die so hergestellten, Carbodiimid-modifizierten Polyisocyanate. Typische Beispiele geeigneter Aufbaukomponenten a₁) sind beispielsweise Diisocyanate der allgemeinen Formel 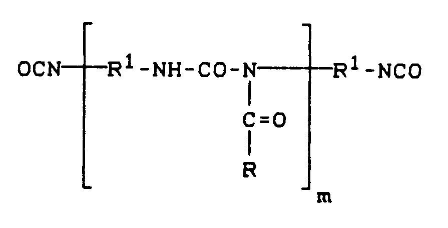
die in der Weise hergestellt werden, daß man in einer ersten Stufe Carbodiimidgruppen von Diisocyanatocarbodiimiden der allgemeinen Formel

OCN(̵R¹-N=C=N)ₘ-R¹-NCO

vollständig oder teilweise mit Carbonsäuren der allgemeinen Formel

R-COOH

gegebenenfalls in Gegenwart eines geeigneten Lösungsmittels bei Temperaturen von 25 bis 100°C reagieren läßt.

In diesen Formeln stehen
- R: für einen organischen Rest, vorzugsweise einen gesättigten oder ungesättigten aliphatischen Kohlenwasserstoffrest mit 1 bis 35 C-Atomen, einen Arylrest mit 6 bis 10 C-Atomen oder einen araliphatischen Rest mit 7 bis 10 C-Atomen, wobei bei Vorliegen von mehreren Resten R im gleichen Molekül nebeneinander unterschiedliche Reste R vorliegen können,
- R¹: für einen zweiwertigen, gegebenenfalls Urethan-, Ester- und/oder Ethergruppen aufweisenden Kohlenwasserstoffrest, wie er durch Entfernung der endständigen Isocyanatgruppen aus einem einfachen organischen Diisocyanat oder einem Urethangruppen und gegebenenfalls Ether- oder Estergruppen aufweisenden NCO-Präpolymer erhalten wird, wobei bei Vorliegen von mehreren Resten R¹ im gleichen Molekül gleichzeitig auch unterschiedliche, der genannten Definition entsprechende Reste R¹ vorliegen können, und
- m: für eine ganze oder (im statistischen Mittel) gebrochene Zahl von 1 bis 10, vorzugsweise von 1 bis 4.

Die Herstellung der Diisocyanatocarbodiimide ist an sich bekannt und wird z.B. in den US-Patentschriften 28 40 589 und 29 41 966 sowie von P.W. Campbell und K.C. Schmeltz in Journal of Organic Chemistry, 28, 2069 (1963) beschrieben. Besonders schonend und frei von Nebenprodukten lassen sich Diisocyanatocarbodiimide auch durch eine Heterogenkatalyse gemäß den deutschen Offenlegungsschriften 25 04 400 und 25 52 350 herstellen. Die Carbodiimidisierung von Diisocyanaten in Gegenwart sehr geringer Mengen an Phospholinoxid unter anschließender Blockierung des Katalysators mit Säurechloriden wird in der DE-OS 26 53 120 beschrieben.

Als Aufbaukomponente für die Carbodiimidgruppen aufweisenden Diisocyanate werden bevorzugt aromatische Diisocyanate der oben unter a1) beispielhaft genannten Art eingesetzt.

Geeignete Carbonsäuren der Formel R-COOH sind beispielsweise Essigsäure, Propionsäure, Hexancarbonsäure, Laurinsäure, Palmitinsäure, Stearinsäure, Benzoesäure, Phenylessigsäure, Acrylsäure, Methacrylsäure, Crotonsäure, 10-Undecensäure, Ölsäure oder Linolsäure. Grundsätzlich ist es auch möglich, andere Monocarbonsäuren einzusetzen, die nicht der oben gemachten Definition von R entsprechen, wie z.B. Chloressigsäure, Cyclohexancarbonsäure, Abietinsäure, 4-Dimethylaminobenzoesäure oder auch Monoester oder Monoamide von Dicarbonsäuren wie Oxalsäure, Malonsäure, Bernsteinsäure, Maleinsäure, Fumarsäure oder Phthalsäure mit einwertigen Alkoholen oder Aminen. Grundsätzlich können auch beliebige Gemische der beispielhaft genannten Säuren der allgemeinen Formel R-COOH eingesetzt werden. Die Menge der eingesetzten Säuren wird so bemessen, daß pro Mol Carbodiimidgruppen 0,2 bis 1,2, vorzugsweise 0,5 bis 1,2 Mol an Carboxylgruppen im Reaktionsgemisch vorliegen.

Bei den Verbindungen b) mit gegenüber Isocyanatgruppen reaktionsfähigen Gruppen handelt es sich vorzugsweise um Verbindungen, die keine (potentiell) hydrophilen Gruppen der oben genannten Art aufweisen, und die mindestens 1, vorzugsweise 2 - 8, und besonders bevorzugt 2 - 4, gegenüber Isocyanatgruppen reaktionsfähige Gruppen tragen. Beispiele sind:
b1) die aus der Polyurethanchemie an sich bekannten Polyester- oder Polyetherpolyole, die vorzugsweise ein aus der Funktionalität und dem Hydroxylgruppengehalt berechenbares Molekulargewicht von 400 - 3.000 aufweisen und die beispielsweise im "Kunststoffhandbuch", Band 7, "Polyurethane", herausgegeben von Dr. Günter Oertel, Carl Hanser-Verlag München, Wien (1983), auf Seiten 42 bis 61 beschrieben sind, und die gegebenenfalls durch Umsetzung mit unterschüssigen Mengen eines Diisocyanats der unter a) beispielhaft genannten Art "vorverlängert" zum Einsatz gelangen können.
b2) mehrwertige Alkohole, die vorzugsweise ein Molekulargewicht von 62 - 400 und 2 - 3 Hydroxylgruppen pro Molekül aufweisen, wie z.B. Ethylenglykol, Propylenglykol, 1,4-Butandiol, 1,6-Hexandiol, Trimethylolpropan, Glycerin oder ein Umsetzungsprodukt aus Natriumhydrogensulfit und 4-fach propoxyliertem 2-Buten-1,4-diol: 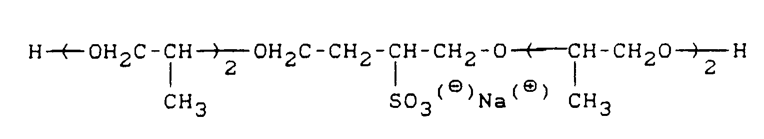 oder Gemische derartiger Kettenverlängerungsmittel bzw. Vernetzer;
b3) organische Polyamine des Molekulargewichtsbereichs 60 - 4.000, wie z.B. Ethylendiamin, Hexamethylendiamin, Isophorondiamin oder "Aminopolyether" des Molekulargewichtsbereichs 400 - 4.000, wie sie beispielsweise in EP-B 81 701 als Ausgangskomponente bei der Herstellung von Polyurethankunststoffen eingesetzt werden.

Vorzugsweise besteht die Komponente b) aus mindestens einem Polyester- oder Polyetherpolyol der unter b1) beispielshaft genannten Art, gegebenenfalls in Abmischung mit mindestens einem niedermolekularen, mehrwertigen Alkohol der unter b2) beispielhaft genannten Art.

Geeignete Aufbaukomponenten c) sind beispielsweise beliebige, mindestens eine gegenüber Isocyanatgruppen reaktionsfähige Gruppe und mindestens eine Sulfonsäure-Gruppe aufweisende Verbindungen. Bevorzugte derartige Aufbaukomponenten sind z.B. 2-Aminoethansulfonsäure, 3-Aminopropansulfonsäure, N-(2-Aminoethyl)aminoethansulfonsäure (AAS) (H₂N-CH₂-CH₂-NH-CH₂-CH₂-SO₃H), 2-Aminobenzolsulfonsäure, 3-Aminobenzolsulfonsäure, 4-Aminobenzolsulfonsäure, 4-Amino-1,3-benzoldisulfonsäure, 5-Amino-1,3-benzoldisulfonsäure, 2-Amino-1,4-benzoldisulfonsäure.

Anstelle der beispielhaft genannten Säuren können auch ihre Salze mit anorganischen und organischen Basen, soweit sie mit den anderen Ausgangsmaterialien verträglich sind, eingesetzt werden. Wie bereits weiter oben ausgeführt, besteht die Aufbaukomponente c) ganz oder überwiegend aus Verbindungen, die lediglich eine gegenüber Isocyanatgruppen reaktionsfähige Gruppe aufweisen.

Die Herstellung der erfindungsgemäßen Oligourethane kann beispielsweise so erfolgen, daß man zunächst aus der Polyisocyanatkomponente a) und der Komponente b) unter Einhaltung eines Äquivalentverhältnisses von Isocyanatgruppen zu gegenüber Isocyanatgruppen reaktionsfähigen Gruppen von 1,5:1 bis 30:1, vorzugsweise 2:1 bis 20:1, ein NCO-Gruppen aufweisendes Präpolymer herstellt und dieses anschließend mit den monofunktionellen Aufbaukomponenten c) umsetzt, wobei im allgemeinen ein Äquivalentverhältnis von Isocyanatgruppen des Prepolymeren zu den gegenüber Isocyanatgruppen reaktionsfähigen Gruppen der monofunktionellen Aufbaukomponenten von ca. 0,9:1 bis 1,1:1, vorzugsweise 0,96:1 bis 1,04;1, eingehalten wird. Die Überführung der gegebenenfalls vorliegenden potentiell ionischen Gruppen in ionische Gruppen kann z.B. nach Abschluß der Isocyanat-Additionsreaktionen erfolgen. Die Aufbaukomponenten c) können aber auch direkt in Form ihrer Alkali-, Amin- oder Ammoniumsalze zur Umsetzung mit den Prepolymeren verwendet werden.

Die Salzbildung kann durch Zugabe von Alkalihydroxiden wie NaOH oder KOH, wäßriger Ammoniaklösung, aliphatischen Aminen, wie z.B. Trimethylamin oder Triethylamin, sowie Aminoalkoholen, wie Ethanolamin, Diethanolamin oder Dimethylethanolamin, erfolgen.

Wie bereits oben ausgeführt, werden Art und Mengenverhältnisse der Ausgangskomponenten so gewählt, daß Oligourethane des oben genannten Molekulargewichtsbereichs resultieren, die im übrigen eine verzweigte Molekülstruktur aufweisen. Unter einer "verzweigten Molekülstruktur" ist hierbei das Vorliegen von mindestens 0,2, vorzugsweise mindestens 1,0 Verzweigungsstellen pro Molekül im statistischen Durchschnitt zu verstehen. Ein derartiger Verzweigungsgrad kann beispielsweise dadurch sichergestellt werden, daß man bei der Herstellung der Oligourethane eine entsprechende Menge an mindestens trifunktionellen Aufbaukomponenten mitverwendet.

Da bei der Herstellung der Oligourethane, wie dargelegt, die Polyisocyanatkomponente in einem erheblichen Überschuß eingesetzt werden kann, handelt es sich oftmals bei den Oligourethanen um Gemische aus
(i) Umsetzungsprodukten der monofunktionellen Aufbaukomponenten, insbesondere den monofunktionellen Aufbaukomponenten c) mit NCO-Prepolymeren aus den Ausgangskomponenten a) und b) und
(ii) Umsetzungsprodukten der monofunktionellen Aufbaukomponenten, insbesondere den monofunktionellen Aufbaukomponenten c) mit Polyisocyanaten a), die nicht mit Ausgangskomponenten b) abreagiert worden sind.

Der Begriff "Oligourethane" soll auch derartige Gemische umfassen. Die gemachten Angaben bezüglich des Molekulargewichts der Oligourethane beziehen sich im Falle dieser Gemische dementsprechend auf das mittlere Molekulargewicht (Zahlenmittel) der in derartigen Gemischen vorliegenden Einzelkomponenten. Bei den Angaben bezüglich des Verzweigungsgrades und bezüglich der Anzahl der in die Oligourethane endständig eingebauten hydrophilen Gruppen handelt es sich um statistische Mittelwerte. So weist beispielsweise ein Umsetzungsprodukt aus 1 Mol Triisocyanat a) mit 3 Mol einer monofunktionellen Aufbaukomponente c), welches endständig 3 hydrophile Zentren aufweist, eine Verzweigungsstelle und 3 endständig angeordnete hydrophile Zentren auf. Das Umsetzungsprodukt von (i) 4 Mol monofunktioneller Aufbaukomponente c) mit (ii) 1 Mol eines (tetrafunktionellen) Prepolymeren aus 2 Mol Triisocyanat a) und 1 Mol Diol b) weist seinerseits im statistischen Mittel 2 Verzweigungsstellen pro Molekül und 4 endständig angeordnete hydrophile Zentren auf. Ein äquimolares Gemisch aus diesen beiden Komponenten wiese demnach im statistischen Mittel 1,5 Verzweigungsstellen pro Molekül und 3,5 endständig angeordnete hydrophile Zentren auf.

Die genannten Isocyanat-Additionsreaktionen werden im allgemeinen innerhalb des Temperaturbereichs von 20 - 180°C, vorzugsweise 50 bis 100°C, durchgeführt, wobei lösungsmittelfrei oder in Anwesenheit eines geeigneten Lösungsmittels, wie beispielsweise Aceton, gearbeitet wird. Besonders gut geeignet ist eine Arbeitsweise, derzufolge die NCO-Prepolymeren aus den Komponenten a) und b) lösungsmittelfrei in der Schmelze hergestellt und anschließend in Aceton gelöst und mit den monofunktionellen Aufbaukomponenten umgesetzt werden. Im Anschluß hieran erfolgt dann gegebenenfalls die Überführung der potentiellen ionischen Gruppen in ionische Gruppen, beispielsweise durch Zugabe eines geeigneten Neutralisationsmittels zur acetonischen Lösung und Überführung der acetonischen Lösung in eine wäßrige Lösung bzw. Dispersion durch Zugabe von Wasser und Abdestillieren des Acetons.

Selbstverständlich können auch andere Lösungsmittel, wie beispielsweise N,N-Dimethylformamid, N,N-Diethylformamid, Methylethylketon, N-Methylpyrrolidon, Toluol, Ethylacetat oder Gemische derartiger Lösungsmittel verwendet werden, wobei auch auf eine Entfernung der Hilfslösungsmittel verzichtet werden kann, falls die Anwesenheit derartiger Lösungsmittel in den letztendlich erhaltenen erfindungsgemäßen Verfahrensprodukten nicht als störend empfunden wird.

Die Oligourethane wirken bei der Herstellung der erfindungsgemäßen Leimungsmittel als Emulgatoren sowie gegebenenfalls als Pfropfsubstrat. Sie kommen im allgemeinen in Form von 5 bis 70, vorzugsweise 20 bis 50 Gew.-%igen wäßrigen, gegebenenfalls kolloidalen Lösungen oder Dispersionen zum Einsatz.

Die Oligourethane weisen aufgrund ihrer speziellen Struktur, ähnlich wie niedermolekulare Emulgatoren, eine sogenannte kritische Mizellkonzentration auf; sie sind somit zur Ausbildung von Mizellstrukturen in wäßrigen Phasen geeignet. Die mittels Oberflächenspannungsmessungen bzw. konduktometrischen Messungen bestimmbaren kritischen Mizellkonzentrationen liegen im allgemeinen bei oberhalb 0,5 g, vorzugsweise bei oberhalb 1,0 g Oligourethan pro Liter Lösung bzw. Dispersion. Diese Konzentrationen stellen somit den unteren Grenzwert dar bezüglich der Konzentration der beim erfindungsgemäßen Verfahren eingesetzten Lösungen bzw. Dispersionen der Oligourethane.

Als radikalisch polymerisierbare Monomere eignen sich insbesondere Styrol(derivate), Ester der (Meth)acrylsäure insbesondere mit gegebenenfalls weitersubstituierten C₁-C₈-Alkylresten und/oder (Meth)acrylnitril sowie Gemische dieser Monomeren. Beispielhaft seien genannt: Styrol, α-Methylstyrol, p-Methylstyrol, p-Ethylstyrol, p-Chlorstyrol, Acrylnitril, Vinylacetat, Ethylacrylat, Methylmethacrylat, n-Butylacrylat, i-Butylacrylat, 2-Ethylhexylacrylat, Methacrylsäureoxipropylester.

Es können sowohl die Monomeren alleine oder in Form von Gemischen untereinander zur Herstellung der erfindungsgemäßen Leimungsmittelemulsionen verwendet werden. Ganz besonders bevorzugt kommt ein Gemisch zum Einsatz, das 20 bis 80, insbesondere 30 bis 70 Gew.-% n-Butylacrylat und 80 bis 20, insbesondere 70 bis 30 Gew.-% Acrylnitril enthält.

Die radikalische Emulsionspolymerisation der genannten Monomeren erfolgt in Gegenwart der anionischen Sulfonsäure- bzw. Sulfonatgruppen enthaltenden Oligourethane, wobei letztere sowohl als Emulgatoren als auch als Pfropfsubstrate wirken können. Die Menge der Oligourethane beträgt dabei, bezogen auf die zu polymerisierenden Monomeren, zwischen 0,5 und 30 Gew.-%, bevorzugt zwischen 3 und 20 Gew.-%, besonders bevorzugt zwischen 5 und 15 Gew.-%.

Bei der Durchführung der Polymerisation kann man beispielsweise folgendermaßen vorgehen:
Es wird eine radikalisch initiierte Copolymerisation der Monomeren(gemische) in Gegenwart wäßriger Lösungen der Oligourethane durchgeführt. Als Radikalstarter eignen sich z.B. Kaliumpersulfat, Ammoniumpersulfat, organische Peroxide, organische Hydroperoxide, Wasserstoffperoxid sowie Redoxsysteme. Die Emulsionspolymerisationen erfolgen bei Temperaturen zwischen 20 und 100°, bevorzugt 40 und 80°C. Die Menge der polymeren Emulgatoren beträgt, bezogen auf die zu polymerisierenden Monomeren, zwischen 5 und 30 Gew.-%, bevorzugt zwischen 7,5 und 20 Gew.-%.

Die Durchführung der Emulsionspolymerisationen kann entweder auf die Weise erfolgen, daß man eine wäßrige Lösung des Oligourethans vorlegt und dann die Monomeren und den Initiator über einen bestimmten Zeitraum, z.B. zwischen 2 und 6 Stunden, getrennt zudosiert, oder aber, daß man einen Teil des Oligourethans in Wasser vorlegt und den Rest zusammen mit den Monomeren und dem Initiator in getrennten Mengenströmen ebenfalls über einen Zeitraum von 2 bis 6 Stunden zudosiert. Es kann aber auch so gearbeitet werden, daß über den gesamten Zeitraum der Polymerisation Oligourethan, Initiator und Monomere getrennt und kontinuierlich zudosiert werden und nur eine bestimmte Menge an Wasser vorgelegt wird. Diese Art der Polymerisation eignet sich aber auch zur Durchführung nach einer batch-Fahrweise, d.h. Oligourethan, Monomer(gemisch) und Initiator werden zusammen vorgelegt, auf die gewünschte Polymerisationstemperatur erhitzt und zwischen 2 und 10 Std. bei dieser Temperatur gehalten.

Nach Beendigung der Polymerisationsreaktion auf die beispielhaft beschriebene Art ist eine feinteilige wäßrige Polymeremulsion mit einem mittleren Teilchendurchmesser zwischen 15 und 200 nm entstanden. Die Emulsion enthält neben Homo- und/oder Copolymerisaten der zur Polymerisation eingesetzten Monomeren oder Monomergemische auch Anteile von Pfropfprodukten der Monomeren, die auf die Oligourethane als Pfropfsubstrate aufgepfropft sind.

Die Polymerisation wird im allgemeinen bei pH-Werten von 4 bis 10, vorzugsweise 6 bis 8, durchgeführt. Die Einstellung der pH-Werte innerhalb der genannten Bereiche erfolgt bei Anwesenheit von sauren Gruppen im Reaktionsgemisch vorzugsweise durch die Zugabe von wäßrigem Ammoniak.

Zur Regulierung der Molekulargewichte der Polymeren können noch übliche Regler eingesetzt werden, z.B. n-Dodecylmercaptan, t-Dodecylmercaptan, Diisopropylxanthogendisulfid, Thioglykol und Thioglycerin. Sie werden im allgemeinen in Mengen von 0,1 bis 2 Gew.-%, bezogen auf die Monomermischung, zugegeben.

Die mittels Laser-Streulicht-Korrelationsspektroskopie gemessenen mittleren Teilchendurchmesser der kolloiddispersen Lösungen liegen je nach Reaktionsbedingungen zwischen 15 und 200 nm, bevorzugt zwischen 20 und 150 nm. Dispersionen mit Teilchengrößen unter 50 nm erscheinen transparent, während solche mit größeren Teilchen zunehmend trüb erscheinen.

Bei den erfindungsgemäßen Leimungsmitteln handelt es sich um Oberflächenleimungsmittel mit schwach anionischem Charakter und geringer Neigung zur Schaumbildung, die ein breites Anwendungsspektrum besitzen. So können sie bei der Papierherstellung sowohl im sauren als auch im neutralen pH-Bereich eingesetzt werden. Sie führen bei alaunhaltigen, alaunfreien, vorgeleimten und holzhaltigen Papieren, die unterschiedliche Füllstoffe, wie Kaolin, Kreide oder TiO₂ enthalten können, zu einer ausgezeichneten Leimungswirkung.

Die Oberflächenleimungsmittel sind nach allen bei der Papierherstellung für die Oberflächleimung gebräuchlichen Verarbeitungsmethoden, wie Einsatz in der Leimpresse oder Aufbringen durch Sprühverfahren, einsetzbar. Die Leimungsmittel können sowohl alleine als auch in Kombination mit wäßrigen Lösungen von Polymeren zur Anwendung kommen. Sie sind gegenüber schaumfördernden Einflüssen, z.B. ungünstigen apparativen Voraussetzungen an der Papiermaschine oder der Leimpresse, schaumbildenden Zusatzstoffen in der Leimungsmittelflotte und hohen Härtegraden des bei der Papierherstellung verwendeten Wassers, unempfindlich. Neben ihrer guten Leimungswirkung stellt auch die Abwesenheit jeglicher Schaumbildung einen weiteren Vorteil dar, da die Leimungsmittel somit ohne Zusatz von Entschäumungsmitteln eingesetzt werden können. Die Leimungsmittel eignen sich entweder alleine oder in Kombination mit Leimungsmitteln, die zur Masse gegeben werden, für die Oberflächenleimung nahezu aller in der Praxis hergestellter Papierqualitäten, z.B. von alaunhaltigen, alaunfreien, mit Kaolin gefüllten, mit Kreide gefüllten, mit TiO₂ gefüllten, im neutralen und sauren pH-Bereich gefahrenen, ungeleimten, vorgeleimten, holzhaltigen und Altpapier enthaltenden Papieren.

Die neuen Leimungsmittel zeichnen sich besonders dadurch aus, daß sie im Vergleich zu Leimungsmitteln mit hoher Anionizität ein wesentlich breiteres Anwendungsspektrum besitzen. Während letztere nur auf alaunhaltigen, vorgeleimten und holzhaltigen Papieren eine gute Leimungswirkung aufweisen, zeigen die erfindungsgemäßen Produkte zusätzlich zu den genannten Papieren auch auf alaunfreien und kreidehaltigen Papieren ausgezeichnete Leimungseigenschaften. Zur Erzielung einer guten Leimung auf den beiden zuletzt genannten Papieren war bisher immer der Einsatz von Oberflächenleimungsmitteln mit kationischer Ladung notwendig.

Im Vergleich zu kationischen Leimungsmitteln bieten die schwach anionischen Produkte den zusätzlichen Vorteil, daß sie zusammen mit optischen Aufhellern eingesetzt werden können, ohne daß eine Löschung der Aufhellerwirkung eintritt.

### Beispiele

### Herstellung der Oligourethane (polymeren Emulgatoren) A bis D:

### Oligourethan A

170 g eines Polyesters aus Adipinsäure, Neopentylglycol und Hexandiol-1,6 (Molverhältnis 4:7), mit einer Hydroxylzahl von 65,9, werden mit 160 g eines Polyisocyanats, das durch Teilpolymerisierung der NCO-Gruppen von Hexamethylendiisocyanat entstanden ist und einen NCO-Gehalt von 21 % hat, vermischt. Es wird auf 90 - 100°C aufgeheizt und so lange nachgerührt, bis der theoretische NCO-Gehalt von 7,6 % erreicht oder leicht unterschritten ist. Das entstandene Vorpolymerisat wird nun mit 330 g Aceton verdünnt und auf Raumtemperatur abgekühlt.

75 g Aminoethansulfonsäure werden in 250 g Wasser gelöst, mit 50,5 g Triethylamin versalzt und anschließend mit 125 g Aceton verdünnt. Es wird so lange bei 40 - 50°C gerührt, bis eine klare Lösung entstanden ist.

Zu dieser Aminlösung wird bei gleicher Temperatur innerhalb 1 Stunde die Vorpolymerlösung zugegeben und nach 15 Minuten Nachrührzeit mit 433 g Wasser dispergiert. Anschließend wird das Aceton abdestilliert. Man erhält eine wäßrige Dispersion mit ca. 40 % Feststoff.

### Oligourethan B

Man verfährt wie in Beispiel 1, versalzt aber mit 60,6 g Triethylamin und dispergiert mit 448 g Wasser.

### Oligourethan C

Man verfährt wie in Beispiel 1, versalzt aber mit 53,4 g Dimethylaminoethanol und dispergiert mit 438 g Wasser.

### Oligourethan D

190 g eines Polyesters aus Adipinsäure, Neopentylglycol und Hexandiol-1,6 (Molverhältnis 4:7), mit einer Hydroxylzahl von 56 und 2,1 g eines Umsetzungsproduktes aus Natriumhydrogensulfit und 4-fach propoxyliertem 2-Buten-1,4-Diol, werden mit 156 g eines Polyisocyantes, das durch Teilpolymerisierung der NCO-Gruppen von Hexamethylendiisocyanat entstanden ist und einen NCO-Gehalt von 21,5% hat, vermischt. Es wird auf 90 - 100°C aufgeheizt und so lange nachgerührt, bis der theoretische NCO-Gehalt von 7,2% erreicht oder leicht unterschritten ist. Das entstandene Vorpolymerisat wird nun mit 348,1 g Aceton verdünnt und auf Raumtemperatur abgekühlt.

440 g 20%iges Aminoethansulfonsäure-Na-Salz werden mit 300 g Aceton verdünnt und verrührt.
Zu dieser Lösung wird bei Raumtemperatur innerhalb 1 Stunde die Vorpolymerlösung zugegeben und nach 15 Minuten Nachrührzeit mit 302 g Wasser dispergiert. Anschließend wird das Aceton abdestilliert.
Man erhält eine wäßrige Dispersion mit ca. 40% Feststoff.

### Herstellung der Leimungsmittelemulsionen:

### Leimungsmittel I

In einem Rührgefäß, das mit Rührer, Rückflußkühler und zwei Tropftrichtern ausgerüstet ist, werden unter Überleiten eines Stickstoffstromes eine Lösung von 25,0 g des Oligourethans A (Festgeh.: 40 %) in 354 g entionisiertem Wasser sowie 270 mg Rongalit C vorgelegt und auf eine Temperatur von 50°C erwärmt.

Danach gibt man von den Lösungen 1 und 2 (s.u.) jeweils 1/4 auf einmal in das Reaktionsgefäß, rührt 1 Stunde bei 50°C und dosiert die restlichen Lösungen 1 und 2 innerhalb von 3 Stunden zu. Nach beendeter Zugabe wird noch 6 Stunden bei 50°C nachgerührt.

Nach Beendigung der Polymerisation ist eine feinteilige Leimungsmittelemulsion mit einem Festgehalt von 20,0 Gew.-% entstanden. Die durch Laserlichtstreuung ermittelte mittlere Teilchengröße beträgt 54 nm.
- Lösung 1:: 800 mg Ammoniumpersulfat
70 g entionisiertes Wasser
- Lösung 2:: 50 g n-Butylacrylat
50 g Acrylnitril

### Leimungsmittel II

In einer Polymerisationsapparatur, die mit Rührer, Rückflußkühler, Stickstoffeinleitung und zwei Flüssigkeitsdosierpumpen ausgerüstet ist, werden 12,5 g einer 40 Gew.-%igen wässrigen Lösung des Oligourethans B, 517,5 g entionisiertes Wasser und 270 mg Rongalit C unter Überleiten eines schwachen Stickstoffstromes vorgelegt. Nach Erwärmen der Lösung auf 50°C werden von den Lösungen 1 und 2 jeweils 1/4 auf einmal zugegeben. Nach einstündigem Rühren dosiert man die restlichen Lösungen 1 und 2 getrennt innerhalb von 3 Stunden zu.

Nach beendeter Addition von 1 und 2 wird noch 6 Stunden bei 50°C nachgerührt. Die entstandene feinteilige Leimungsmittelemulsion hat einen Feststoffgehalt von 14,5 Gew.-% und eine mittlere Teilchengröße - gemessen mit der Laserlichtstreuungsmethode - von 62 nm.
- Lösung 1:: 800 mg Ammoniumpersulfat
70 g entionisiertes Wasser
- Lösung 2:: 50 g n-Butylacrylat
50 g Acrylnitril

### Leimungsmittel III

Die Herstellung des Leimungsmittels III erfolgte analog zu Leimungsmittel II, jedoch mit wie folgt geänderter Vorlage:
25 g Oligourethan B (40 Gew.-%ig in Wasser), 354 g entionisiertes Wasser.

Nach beendeter Polymerisation erhält man auch hier eine feinteilige Leimungsmittelemulsion mit einem Festgehalt von 19,1 gew.-%.
- Lösung 1:: 800 mg Ammoniumpersulfat
70 g entionisiertes Wasser
- Lösung 2:: 50 g n-Butylacrylat
50 g Acrylnitril

### Leimungsmittel IV

Die Herstellung des Papieroberflächenleimungsmittels IV erfolgte analog zu den Leimungsmitteln II und III, jedoch mit folgender Vorlage:
7,5 g Oligourethan C (Festgeh.: 40 % i. Wasser)
338 g entionisiertes Wasser
270 mg Rongalit C
Nach beendeter Polymerisation ist hierbei eine feinteilige Leimungsmittelemulsion mit einem Festgehalt von 19,6 % und einer mittleren Teilchengröße von 66 nm entstanden.
- Lösung I:: 800 mg Ammoniumpersulfat
70 g entionisiertes Wasser
- Lösung II:: 50 g n-Butylacrylat
50 g Acrylnitril

### Leimungsmittel V

Die Herstellung des Leimungsmittels V erfolgte analog zu den Leimungsmitteln II, III und IV, jedoch mit geänderter Vorlage:
17,5 g Oligourethan D (Festgeh.: 40 % in Wasser)
348 g entionisiertes Wasser
270 mg Rongalit C.

Die entstandene feinteilige Leimungsmittelemulsion wird zur Entfernung von restlichen Monomeren einem Entgasungsvorgang im Vakuum unterworfen. Festgehalt: 20,7 %.

Die auf die beschriebene Weise erhaltenen Leimungsmittelemulsionen I bis V können direkt als solche zur Oberflächenleimung eingesetzt werden.

### Anwendungsbeispiele

Die Leimungswirkung der erfindungsgemäßen Leimungsmittel wurde auf alaunfreien und alaunhaltigen Papieren folgender Zusammensetzung geprüft:
a.) Alaunfreies Papier:
   50 % Nadelholzzellstoff, 50 % Laubholzzellstoff, 9,5 % Clay-Asche, pH-Wert im Stoffauflauf: 7,2; Mahlgrad: 35°SR; Nassaufnahme in einer Laborleimpresse: ca. 85 %; Flächengewicht: 80 g/m².
b.) Alaunhaltiges Papier:
   50 % Nadelholzzellstoff, 50 % Laubholzzellstoff, 1 % Alaun, 11,2 % Clay-Asche, pH-Wert im Stoffauflauf: 5,0; Mahlgrad: 35°SR; Nassaufnahme: ca 80 %; Flächengewicht: 80 g/m².

Die Leimung der Papiere erfolgte auf einer Laborleimpresse der Firma Mathis, Zürich, Schweiz, Typ HF. Als Leimungsflotte wurde eine Lösung aus 5 Gew.-Teilen handelsüblicher Stärke sowie 0,20 Teilen des zu prüfenden Leimungsmittels verwendet, die mit Wasser bis auf 100 Teile ergänzt wurde. Die Trocknung der oberflächengeleimten Papiere erfolgte auf einem Trockenzylinder innerhalb einer Minute bei ca 100°C. Vor der Leimungsprüfung wurden die Papiere zwei Stunden bei Raumtemperatur klimatisiert.

Zur Beurteilung des Leimungsgrades der oberflächengeleimten Papiere wurden die Cobb-Werte (nach DIN 53 132) bestimmt sowie Tintenschwimmproben (TSP) durchgeführt. Für die Tintenschwimmproben wurden die Papiere in Streifen von drei Zentimeter Breite und 3 cm Länge geschnitten und bei 22°C auf blaue Prüftinte (DIN 53 126) gelegt. Nach für die einzelnen Papiersorten unterschiedlichen Prüfzeiten wurden die Probenpapiere von der Tinte genommen, rückseitig auf Löschpapier abgequetscht und nach 5 Minuten visuell beurteilt. Zur qualitativen Bestimmung der Tintendurchdringung durch das Papier und somit des Leimungsgrades wurde eine Bewertung mit den Zahlen 1 bis 5 durchgeführt, wobei die Zahlen im einzelnen bedeuten:
1 kein Tintendurchschlag
2 5 bis 10 % Tintendurchschlag
3 10 bis 20 % Tintendurchschlag
4 ca. 50 % Tintendurchschlag
4,5*⁾ ca. 90 % Tintendurchlag
5 100 % Tintendurchschlag

*⁾ Außerdem können noch weitere Zwischenwerte herangezogen werden.

Die folgenden Tabellen zeigen die Wirksamkeit der erfindungsgemäßen Papieroberflächenleimungsmittel I bis IV auf drei verschiedenen Papiersorten.

### Anwendungsbeispiele:

In den Anwendungsbeispielen 1 bis 4 werden alaunfreies und alaunhaltiges Papier mit jeweils 0,2 Gew.-% der erfindungsgemäßen Leimungsmittel I bis V in der Oberfläche geleimt. Die dabei gefundenen anwendungstechnischen Ergebnisse sind in den Tabellen 1 bis 5 zusammengestellt.

### Anwendungsbeispiel 1: Leimungsmittel I.

**Tabelle 1**

| Papiersorte | Cobb-Wert (60'') [g/m²] | T S P | |
|---|---|---|---|
| | | Zeit(Min) | Bewertung |
| Alaunfrei | 24,8 | 12 | 2,5 |
| Alaunhaltig | 24,9 | 12 | 2,5 |

### Anwendungsbeispiel 2: Leimungsmittel II.

**Tabelle 2**

| Papiersorte | Cobb-Wert (60'') [g/m²] | T S P | |
|---|---|---|---|
| | | Zeit(Min) | Bewertung |
| Alaunfrei | 34,9 | 10 | 2,5 |
| Alaunhaltig | 21,0 | 15 | 2,5 |

### Anwendungsbeispiel 3: Leimungsmittel III.

**Tabelle 3**

| Papiersorte | Cobb-Wert (60'') [g/m²] | T S P | |
|---|---|---|---|
| | | Zeit(Min) | Bewertung |
| Alaunfrei | 25,2 | 10 | 3 |
| Alaunhaltig | 23,8 | 15 | 3 |

### Anwendungsbeispiel 4: Leimungsmittel IV.

**Tabelle 4**

| Papiersorte | Cobb-Wert (60'') [g/m²] | T S P | |
|---|---|---|---|
| | | Zeit(Min) | Bewertung |
| Alaunfrei | 23,8 | 17 | 2 |
| Alaunhaltig | 23,7 | 10 | 2 |

### Anwendungsbeispiel 5: Leimungsmittel V.

**Tabelle 5**

| Papiersorte | Cobb-Wert (60'') [g/m²] | T S P | |
|---|---|---|---|
| | | Zeit(Min) | Bewertung |
| Alaunfrei | 24,3 | 8 | 2,5 |
| Alaunhaltig | 21,8 | 10 | 2,5 |

### Anwendungsbeispiel 6:

Am Beispiel der Leimungsmittel I bis V wird das Schaumverhalten der erfindungsgemäßen Oberflächenleimungsmittel beschrieben.

0,4 Gew.-% Leimungsmittels (als Feststoff berechnet) werden in einer Leimungsflotte aus 5 Gew.-% handelsüblicher Stärke (Perfectamyl A 4652®) gelöst und auf 60°C erwärmt. 200 ml dieser Leimungsflotte werden aus einem Aluminiumgefäß, das an seiner Unterseite eine kreisförmige Öffnung von 4 mm Durchmesser (Ford-Becher) besitzt, aus einer Höhe von 60 cm in ein graduiertes Gefäß im freien Fall geleitet. Das Volumen in ml des sich über der Flüssigkeitsoberfläche bildenden Schaums wird einmal sofort sowie nach 1-minütigem Stehen an der Luft bestimmt.

Der erste Wert gibt dabei Aufschluß über die Schaumbildungstendenz und der zweite Wert über die Schnelligkeit des Schaumabbaus bzw. über die Stabilität des Schaums. Die mit den Oberflächenleimungsmitteln I bis V erhaltenen Prüfergebnisse sind in Tabelle 6 zusammengestellt:

**Tabelle 6**

| Leimungsmittel | Schaumvolumen in ml | |
|---|---|---|
| | sofort | nach 1 Min. |
| I | 60 | 0 |
| II | 60 | 0 |
| III | 60 | 0 |
| IV | 60 | 0 |
| V | 50 | 0 |

Die gefundenen Messergebnisse für das Schaumvolumen zeigen sehr deutlich, daß die untersuchten Produkte praktisch keine Tendenz zur Schaumbildung zeigen.

## Patentansprüche

1. Verfahren zum Leimen von Papier und papierähnlichen Materialien, dadurch gekennzeichnet, daß als Leimungsmittel Emulsionspolymerisate, vorzugsweise in Form wäßriger Lösungen oder Dispersionen, eingesetzt werden, die erhältlich sind durch radikalische Polymerisation von Vinylmonomeren bestehend aus einem Gemisch aus
A) 5 - 95 Gew.-% mindestens eines Monomeren aus der Reihe Acrylnitril, Methacrylnitril, Carbonsäurevinylester und
B) 5 - 95 Gew.-% Acryl- und/oder Methacrylsäureester,
wobei die Summe der Komponenten A) + B) 100 Gew.-% beträgt,
in wäßrigem Medium in Gegenwart sulfonsäuregruppenhaltiger Oligourethane, die im statistischen Durchschnitt pro Molekül mindestens 0,2 Verzweigungsstellen aufweisen, frei sind von Acrylharnstoffen der Formel 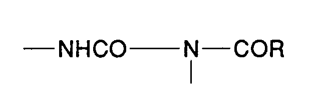 worin
R für einen organischen Rest steht,
ein mittleres Molekulargewicht unter 30 000 besitzen und durchschnittlich mindestens 2,2 endständige Sulfonatgruppen pro Molekül aufweisen.

2. Verfahren gemäß Anspruch 1, dadurch gekennzeichnet, daß die Oligourethane -SO₃⁻Me⁺-Gruppen (Me⁺ = H⁺, Li⁺, Na⁺, K⁺, NH₄⁺ oder substituiertes Ammonium) enthalten.

3. Verfahren gemäß Anspruch 1, dadurch gekennzeichnet, daß A) mindestens ein Monomer aus der Reihe Acrylnitril, Vinylacetat, Methacrylnitril und B) mindestens einen (Meth)acrylsäureester mit 1 bis 12 C-Atomen im Alkoholrest, wie Ethylacrylat, Methylmethacrylat, n-Butylacrylat, i-Butylacrylat, 2-Ethylhexylacrylat, 3-Hydroxypropylmethacrylat, enthält.

4. Verfahren gemäß Ansprüchen 1 und 3, dadurch gekennzeichnet, daß man als Vinylmonomere ein Gemisch aus 20 - 80, insbes. 30 - 70 Gew.-% A und 80 - 20, insbesondere 70 - 30 Gew.-% B einsetzt.

5. Verfahren gemäß Ansprüchen 1-4, dadurch gekennzeichnet, daß das Oligourethan in Mengen von 1 - 50, vorzugsweise 4 - 30 und insbesondere 5 - 25 Gew.-%, bezogen auf das Gewicht der Vinylmonomeren, eingesetzt wird.

6. Verfahren gemäß Ansprüchen 1 - 5, dadurch gekennzeichnet, daß bei der Polymerisation zusätzlich oligomere nichtionogene und/oder niedermolekulare anionische Emulgatoren, vorzugsweise in Mengen von 1 - 40 Gew.-%, bezogen auf das Oligourethan, eingesetzt werden.

7. Verfahren gemäß Ansprüchen 1 - 6, dadurch gekennzeichnet, daß man als Oligourethane solche verwendet, die durch Umsetzung von
a) organischen Polyisocyanaten, gegebenenfalls unter Mitverwendung organischer Monoisocyanate, mit
b) gegenüber Isocyanatgruppen reaktionsfähige Gruppen aufweisenden Verbindungen, und gegebenenfalls unter Mitverwendung von
c) Hilfs- und Zusatzstoffen
und Überführung des erhaltenden Polyisocyanatadditionsproduktes in eine wäßrige Lösung oder Dispersion während oder im Anschluß an die Polyadditionsreaktion hergestellt wurden, wobei anionische Gruppen, insbesondere Sulfonatgruppen oder in derartige Gruppen überführbare Gruppen aufweisende Aufbaukomponenten (mit)verwendet werden, wobei die zumindest teilweise Überführung der in Salzgruppen der genannten Art überführbaren Gruppen während oder anschließend an die Polymerisation erfolgt.

8. Verfahren gemäß Anspruch 7, dadurch gekennzeichnet, daß man als Aufbaukomponente b) hydrophobe, OH-Gruppen enthaltende Polyester, die aus aliphatischen Diolen und Dicarbonsäuren hergestellt wurden und die Molekulargewichte zwischen 500 und 10.000, bevorzugt zwischen 1.000 und 4.000, besitzen, sowie hydrophobe, OH-Gruppen enthaltende Polyether mit Molekulargewichten zwischen 500 und 10.000, bevorzugt zwischen 1.000 und 4.000, besitzen, einsetzt.

9. Verfahren gemäß Ansprüchen 1-8, dadurch gekennzeichnet, daß die Emulsionspolymerisate in Form kolloiddisperser Lösungen mit mittleren Teilchendurchmessern von 15 - 200 nm vorliegen.

10. Verfahren gemäß Ansprüchen 1 bis 9, dadurch gekennzeichnet, daß das Papier und papierähnliche Material in der Oberfläche geleimt wird.

## Claims

1. Process for sizing paper and paper-like materials, characterised in that emulsion polymers, preferably in the form of aqueous solutions or dispersions, are used as the size, which polymers are obtainable by free-radical polymerisation of vinyl monomers consisting of a mixture of
A) 5 to 95 wt.% of at least one monomer from the series acrylonitrile, methacrylonitrile, carboxylic acid vinyl esters and
B) 5 to 95 wt.% of acrylic and/or methacrylic acid esters,
wherein the sum of components A) + B) is 100 wt.%,
in an aqueous medium in the presence of oligourethanes containing sulphonic acid groups, which oligourethanes have a statistical average of 0.2 branch points per molecule, contain no acyl ureas of the formula 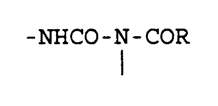 in which
R denotes an organic residue,
have an average molecular weight of less than 30,000 and on average have at least 2.2 terminal sulphonate groups per molecule.

2. Process according to claim 1, characterised in that the oligourethanes contain -SO₃⁻Me⁺ groups (Me⁺ = H⁺, Li⁺, Na⁺, K⁺, NH₄⁺ or substituted ammonium).

3. Process according to claim 1, characterised in that A) contains at least one monomer from the series acrylonitrile, vinyl acetate, methacrylonitrile and B) contains at least one (meth)acrylic acid ester with 1 to 12 C atoms in the alcohol residue, such as ethyl acrylate, methyl methacrylate, n-butyl acrylate, i-butyl acrylate, 2-ethylhexyl acrylate, 3-hydroxypropyl methacrylate.

4. Process according to claims 1 and 3, characterised in that a mixture of 20 to 80, in particular 30 to 70 wt.% of A and 80 to 20, in particular 70 to 30 wt.% of B are used as the vinyl monomers.

5. Process according to claims 1 to 4, characterised in that the oligourethane is used in quantities of 1 to 50, preferably 4 to 30 and in particular 5 to 25 wt.% related to the weight of the vinyl monomers.

6. Process according to claims 1 to 5, characterised in that oligomeric non-ionic and/or low molecular weight anionic emulsifiers are additionally used during polymerisation, preferably in quantities of 1 to 40 wt.% related to the oligourethane.

7. Process according to claims 1 to 6, characterised in that the oligourethanes used are those produced by the reaction of
a) organic polyisocyanates, optionally also using organic monoisocyanates, with
b) compounds having groups reactive with isocyanate groups and optionally also using
c) auxiliary substances and additives
and conversion of the resultant polyisocyanate addition product into an aqueous solution or dispersion during or subsequent to the polyaddition reaction, wherein anionic groups, in particular sulphonate groups or structural components having groups convertible into such groups are (also) used, wherein the at least partial conversion of the groups convertible into salt groups of the stated type proceeds during or subsequent to polymerisation.

8. Process according to claim 7, characterised in that hydrophobic polyesters containing OH groups, which polyesters were produced from diols and dicarboxylic acids and which have molecular weights of between 500 and 10,000, preferably of between 1,000 and 4,000, together with hydrophobic polyethers containing OH groups which have molecular weights of between 500 and 10,000, preferably of between 1,000 and 4,000, are used as structural component b).

9. Process according to claims 1 to 8, characterised in that the emulsion polymers are in the form of colloidally dispersed solutions with average particle diameters of 15 to 200 nm.

10. Process according to claims 1 to 9, characterised in that the paper and paper-like material is surface sized.

## Revendications

1. Procédé pour l'encollage du papier et de matériaux semblables au papier, caractérisé en ce que l'on utilise comme agents d'encollage des polymères en émulsion, de préférence sous forme de solutions ou dispersions aqueuses, que l'on obtient par polymérisation radicalaire de monomères vinyliques consistant en un mélange de :
A) 5-95 % en poids d'au moins un monomère de la série de l'acrylonitrile, du méthacrylonitrile et des esters vinyliques d'acides carboxyliques et
B) 5-95 % en poids d'esters acryliques et/ou méthacryliques,
la somme des composants A + B étant de 100 % en poids,
en milieu aqueux en présence d'oligouréthannes contenant des groupes acides sulfoniques, qui présentent en moyenne statistique au moins 0,2 point de ramification par molécule, qui sont exempts de groupes acylurées de formule 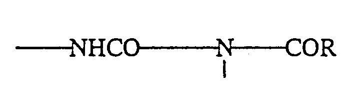 dans laquelle
R représente un reste organique,
qui ont un poids moléculaire moyen inférieur à 30 000 et qui présentent en moyenne au moins 2,2 groupes sulfonates terminaux par molécule.

2. Procédé selon la revendication 1, caractérisé en ce que les oligouréthannes contiennent des groupes -SO₃⁻Me⁺ (Me⁺ = H⁺, Li⁺, Na⁺, K⁺, NH₄⁺ ou ammonium substitué).

3. Procédé selon la revendication 1, caractérisé en ce que A) contient au moins un monomère de la série de l'acrylonitrile, de l'acétate de vinyle, du méthacrylonitrile et B) contient au moins un ester d'acide (méth)acrylique d'un alcool en C₁-C₁₂, tel qu'acrylate d'éthyle, méthacrylate de méthyle, acrylate de n-butyle, acrylate d'isobutyle, acrylate de 2-éthylhexyle, méthacrylate de 3-hydroxypropyle.

4. Procédé selon les revendications 1 et 3, caractérisé en ce que l'on utilise comme monomères vinyliques un mélange de 20-80 % en poids, en particulier 30-70 % en poids de A et 80-20 % en poids, eu particulier 70-30 % en poids de B.

5. Procédé selon les revendications 1 à 4, caractérisé en ce que l'oligouréthanne est utilisé en quantités de 1 à 50 % en poids, de préférence 4 à 30 et en particulier 5 à 25 % en poids, par rapport au poids des monomères vinyliques.

6. Procédé selon les revendications 1 à 5, caractérisé en ce que l'on utilise en outre dans la polymérisation des émulsifiants non ionogènes oligomères et/ou anioniques de bas poids moléculaire, de préférence en quantités de 1 à 40 % en poids, par rapport à l'oligouréthanne.

7. Procédé selon les revendications 1 à 6, caractérisé en ce que l'on utilise des oligouréthannes préparés par réaction
a) de polyisocyanates organiques, éventuellement avec utilisation simultanée de monoisocyanates organiques, et
b) de composés présentant des groupes réactifs vis-à-vis des groupes isocyanates et éventuellement avec utilisation simultanée
c) d'agents auxiliaires et additifs
et transformation du produit d'addition de polyisocyanate obtenu en une solution ou dispersion aqueuse pendant ou après la réaction de polyaddition, avec l'utilisation (simultanée) de composants de structure présentant des groupes anioniques, en particulier des groupes sulfonates ou des groupes transformables en ces groupes, la transformation au moins partielle des groupes transformables en groupes salins du type cité s'effectuant pendant ou après la polymérisation.

8. Procédé selon la revendication 7, caractérisé en ce que l'on utilise comme composant b) des polyesters hydrophobes à groupes OH qui ont été fabriqués à partir de diols et d'acides dicarboxyliques aliphatiques et possèdent des poids moléculaires compris entre 500 et 10000, de préférence entre 1000 et 4000, ainsi que des polyéthers hydrophobes à groupes OH ayant des poids moléculaires entre 500 et 10000, de préférence entre 1000 et 4000.

9. Procédé selon les revendications 1 à 8, caractérisé en ce que les polymères en émulsion sont sous forme de solutions colloïdales dispersées ayant des diamètres moyens de particules de 15-200 nm.

10. Procédé selon les revendications 1 à 9, caractérisé en ce que l'on encolle en surface le papier et le matériau semblable au papier.
